# NEUE EUROPÄISCHE PATENTSCHRIFT

(11) **EP 3 218 181 B2**
(45) Veröffentlichungstag und Bekanntmachung des Hinweises auf die Entscheidung über den Einspruch: **04.01.2023**
(45) Hinweis auf die Patenterteilung: 29.08.2018
(21) Anmeldenummer: 15794093.3
(22) Anmeldetag: 23.10.2015
(51) Int. Cl.: B32B 5/02, B32B 5/06, B32B 5/24, B60N 2/58, A47C 7/24, B32B 5/08, B32B 5/18, B32B 5/22, B32B 7/12

(54) **KASCHIERUNGSTEXTILVERBUNDMATERIAL ENTHALTEND EINE VLIESSTOFFKOMPONENTE UND EINE SCHAUMSTOFFKOMPONENTE**
LAMINATED TEXTILE COMPOSITE MATERIAL CONTAINING A NON-WOVEN FABRIC COMPONENT AND A FOAM COMPONENT
MATÉRIAU COMPOSITE TEXTILE DE CONTRECOLLAGE CONTENANT UN COMPOSANT NON TISSÉ ET UN COMPOSANT MOUSSE

(30) Priorität: 10.11.2014 DE 102014116356
(43) Veröffentlichungstag der Anmeldung: 20.09.2017
(73) Patentinhaber: J.H. Ziegler GmbH, 77855 Achern (DE)
(72) Erfinder: SCHÖNFELDER, Steffi, 77880 Sasbach (DE)
(74) Vertreter: Daub, Thomas
(86) Internationale Anmeldenummer: PCT/EP2015/074621
(87) Internationale Veröffentlichungsnummer: WO 2016/074908

(56) Entgegenhaltungen:
- EP-A1- 0 469 309
- EP-A1- 1 039 005
- EP-A1- 1 039 005
- EP-A1- 1 270 199
- EP-A1- 1 772 258
- EP-A2- 0 753 402
- EP-A2- 2 414 574
- WO-A1-01/96639
- WO-A1-2011/084670
- WO-A1-2013/176176
- WO-A1-2013/176176
- WO-A2-2014/150336
- WO-A2-2014/150336
- DE-A1- 19 845 735
- DE-A1- 19 845 735
- DE-A1-102007 004 696
- DE-A1-102010 047 105
- DE-A1-102013 104 715
- DE-U1- 9 415 040
- DE-U1- 9 415 040
- DE-U1-202009 015 059
- DE-U1-202009 015 059
- DE-U1-202011 004 408
- JP-A- H09 248 872
- JP-A- 2003 300 290
- US-A1- 2004 103 970
- US-A1- 2004 103 970
- Übersetzung D6
- Merkmalsgliederung des erteilten Anspruchs 1
- Übersetzung JP 2003300290 A
- Übersetzung JP H09248872
- DIN EN ISO 13934-2
- Experimentelle Daten, Vergleich der Normen DIN53530, DIN 54310 DIN53357A

## Beschreibung

### Stand der Technik

Die Erfindung betrifft einen Sitzbezug nach dem Oberbegriff des Anspruchs 1.

Aus WO 2014/150336 A2 ist bereits ein Kaschierungstextilverbundmaterial bekannt, das eine Gesamtmaterialstärke aufweist, die kleiner ist als 7 mm, und die zumindest eine Vliesstoffkomponente sowie zumindest eine Schaumstoffkomponente umfassen, die miteinander verbunden sind, wobei die Vliesstoffkomponente zumindest eine Bindefaser aufweist, die eine Schmelztemperatur aufweist, die größer ist als 150 °C, wobei die Vliesstoffkomponente zumindest eine Funktionsfaser umfasst, die einen Feinheitswert kleiner als oder gleich 50 dtex aufweist.

Aus DE 94 15 040 U1 ist bereits ein Kaschierungstextilverbundmaterial bekannt, das eine aus einer oder mehreren Lagen bestehende körpernahe Warenseite aus einem textilen Flächengebilde aufweist, wobei mindestens eine dieser Lagen aus konduktiven Hohlfasern gebildet ist, und einem sich daran anschliessenden Abstandshalter aus offenzelligem Schaum, wobei das auf der körpernahen Warenseite angeordnete textile Flächengebilde aus einem Vlies-Material gebildet ist. Eine Gesamtmaterialstärke des Kaschierungstextilverbundmaterials ist kleiner als 7 mm. Die konduktiven Fasern sind als Mikrofilamente ausgebildet. Die körpernahe Warenseite weist ferner saugfähige Fasern auf, die aus Baumwolle, Viskose oder Mischungen von Polyester/Viskose gebildet sind und eine Schmelztemperatur aufweisen, die größer ist als 150 °C.

Aus EP 1 039 005 A1 ist bereits ein Kunstleder bekannt, das eine Vliesstoffkomponente enthaltend 30-95 % Gew. Hohlfasern und 5-70 % Gew. Nicht-Hohlfasern und eine porösen Deckschicht umfasst. Die Hohlfasern und die Nicht-Hohlfasern sind aus Polyethylenterephthalat gebildet.

Aus US 2004/103970 A1 ist bereits ein Vliesstoff bekannt, der 10-50 % Gew. Hohlfasern als Funktionsfasern aus Polyethylenterephthalat (PET) mit einem Feinheitswert von 2-18 denier und Bikomponentbindefaser aus Polyethylen/Polypropylen, Polyethyllen/Polyester, Polypropylen/Polyester, Copolyester/PET, Nylon 6/Nylon 6,6 oder Nylon 6/PET umfasst.

Die Aufgabe der Erfindung besteht insbesondere darin, einen gattungsgemäßen Sitzbezug bereitzustellen, der eine vorteilhafte Verarbeitbarkeit, insbesondere eine zeitsparende Verarbeitbarkeit, ermöglicht. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Sitzbezug, der zumindest teilweise aus einem Kaschierungstextilverbundmaterial, insbesondere einem Sitzbezugskaschierungstextilverbundmaterial, gebildet ist, wobei das Kaschierungstextilverbundmaterial eine Gesamtmaterialstärke aufweist, die kleiner ist als 7 mm, und wobei das Kaschierungstextilverbundmaterial zumindest ein Vliesstoffkomponente sowie zumindest ein Schaumstoffkomponente, die mit der Vliesstoffkomponente verbunden ist, aufweist, wobei die Vliesstoffkomponente zumindest eine Bindefaser aufweist, die eine Schmelztemperatur aufweist, die größer ist als 150 °C, wobei die Vliesstoffkomponente zumindest eine Funktionsfaser umfasst, die einen Feinheitswert kleiner als oder gleich 50 dtex aufweist, wobei die Funktionsfaser als Hohlfaser ausgebildet ist.

Es wird vorgeschlagen, dass die Vliesstoffkomponente eine Vielzahl an Bindefasern und eine Vielzahl an Funktionsfasern aufweist, die miteinander vermischt sind, wobei die Bindefasern und/oder die Funktionsfasern als Spinnfasern oder als Filamente vorliegen, wobei die Bindefasern und/oder die Funktionsfasern der Vliesstoffkomponente infolge eines Vermischens untereinander mittels einer formschlüssigen Verbindung, mittels Kohäsion und/oder mittels Adhäsion verbunden sind, wobei die Bindefasern und/oder die Funktionsfasern zu einer Bildung der Vliesstoffkomponente orientiert oder wirr angeordnet sind, wobei die Vliesstoffkomponente und die Schaumstoffkomponente mechanisch miteinander verbunden sind, wobei die Vliesstoffkomponente und die Schaumstoffkomponente miteinander vernadelt sind, wobei eine einer Schaumstoff-Vlies-Trennkraft entgegenwirkende Haltekraft zwischen der Vliesstoffkomponente und der Schaumstoffkomponente größer ist als 1 N und wobei die Bindefaser eine Schmelztemperatur aufweist, die einem Wert zwischen 160 °C und 190 °C entspricht. Vorzugsweise ist die Bindefaser als Schmelzfaser ausgebildet, die infolge einer teilweisen oder vollständigen Schmelze dazu vorgesehen ist, als Klebemittel zu einer Anbindung einer weiteren Komponente zu dienen oder zu einer Bindung einzelner Fasern der Vliesstoffkomponente untereinander zu dienen. Unter "vorgesehen" soll insbesondere speziell ausgelegt und/oder speziell ausgestattet verstanden werden. Darunter, dass ein Element und/oder eine Einheit zu einer bestimmten Funktion vorgesehen ist/sind, soll insbesondere verstanden werden, dass das Element und/oder die Einheit diese bestimmte Funktion in zumindest einem Anwendungs- und/oder Betriebszustand erfüllen/erfüllt und/oder ausführen/ausführt oder dass das Element und/oder die Einheit speziell zu einer Erfüllung dieser bestimmten Funktion ausgelegt ist/sind. Die Bindefaser weist insbesondere einen Feinheitswert auf, der größer ist als 1 dtex, bevorzugt größer ist als 5 dtex und besonders bevorzugt kleiner ist als 15 dtex. Ganz besonders bevorzugt weist die Bindefaser einen Feinheitswert auf, der einem Wert zwischen 1 dtex und 9 dtex entspricht. Vorzugsweise weist die Bindefaser eine Schmelztemperatur auf, die größer ist als 160 °C und besonders bevorzugt gleich oder kleiner ist als 200 °C. Die Bindefaser ist vorzugsweise als Verbindungselement der Vliesstoffkomponente vorgesehen, das zumindest ein weiteres Material, insbesondere ein Klebeweb, mit der Vliesstoffkomponente verbindet, insbesondere nach einem Erhitzungsprozess stoffschlüssig verbindet. Hierbei ist das weitere Material beispielsweise als Gewebe, als Gewirke, als weitere Vliesstoffkomponente, als Gestrick o. dgl. ausgebildet. Bei einem Fertigungsprozess erfolgt bevorzugt in einem Ofen eine thermische Aktivierung der Bindefaser. Hierdurch bewirkt die Bindefaser eine thermische Bindung mit Fasern des weiteren Materials, wobei die nicht schmelzenden Fasern des weiteren Materials an die geschmolzene Bindefaser klebbar sind. Der Materialverbund aus dem weiteren Material und zumindest der Vliesstoffkomponente bleibt bevorzugt in sich elastisch und dehnbar.

Die Vliesstoffkomponente umfasst vorzugsweise zusätzlich zu der zumindest einen Bindefaser (Schmelzfaser) zumindest eine Funktionsfaser. Bevorzugt ist die Funktionsfaser als Polyesterfaser, insbesondere als Polyethylenterephthalatfaser, ausgebildet. Es ist jedoch auch denkbar, dass die Funktionsfaser eine andere, einem Fachmann als sinnvoll erscheinende Ausgestaltung aufweist, wie beispielsweise eine Ausgestaltung als Polyamidfaser, als Polyolefinfaser, als Polyacrylnitrilfaser, als Polyvinylchloridfaser, als Polyvinylalkoholfaser, als Polyvinyllidenfaser, als Polytetrafluorethylenfaser, als Polyurethanfaser o. dgl. Die Funktionsfaser weist hierbei insbesondere einen Feinheitswert auf, der größer ist als 1 dtex, bevorzugt größer ist als 15 dtex und besonders bevorzugt kleiner ist als 30 dtex. Ganz besonders bevorzugt weist die Funktionsfaser einen Feinheitswert auf, der einem Wert zwischen 1,5 dtex und 24 dtex entspricht. Bevorzugt weist die Funktionsfaser einen Feinheitswert auf, der kleiner ist als 40 dtex und besonders bevorzugt kleiner ist als 30 dtex. Ganz besonders bevorzugt weist die Funktionsfaser einen Feinheitswert auf, der einem Wert aus einem Wertebereich von 1,5 dtex bis 24 dtex entspricht. Es kann vorteilhaft eine offenporige Vliesstoffkomponente realisiert werden. Somit kann vorteilhaft eine atmungsaktive Vliesstoffkomponente realisiert werden.

Vorzugsweise weist die Funktionsfaser ein hohes Wiedererholvermögen auf. Hierzu ist die Funktionsfaser bevorzugt spiralgekräuselt ausgebildet. Besonders bevorzugt weist die Vliesstoffkomponente eine Vielzahl an Bindefasern und eine Vielzahl an Funktionsfasern auf, die miteinander vermischt sind. Hierbei können die Bindefasern und/oder die Funktionsfasern als Spinnfasern (Stapelfasern) oder als Filamente (Endlosfasern) vorliegen. Die Bindefasern und/oder die Funktionsfasern der Vliesstoffkomponente sind infolge eines Vermischens vorzugsweise untereinander mittels einer formschlüssigen Verbindung (durch Verschlingung), mittels Kohäsion und/oder mittels Adhäsion verbunden. Hierbei können die Bindefasern und/oder die Funktionsfasern zu einer Bildung der Vliesstoffkomponente orientiert oder wirr angeordnet sein. Die Vliesstoffkomponente weist insbesondere ein Flächengewicht auf, das größer ist als 30 g/m², bevorzugt größer ist als 60g/m² und besonders bevorzugt kleiner ist als 550 g/m². Ganz besonders bevorzugt weist die Vliesstoffkomponente ein Flächengewicht auf, das einem Wert aus einem Wertebereich von 50 g/m² bis 500 g/m² entspricht.

Die Schaumstoffkomponente ist vorzugsweise als Polyurethan-Polyether-Schaum oder als Polyurethan-Polyester-Schaum, insbesondere als Polyurethan-Polyether-Schnittschaum oder als Polyurethan-Polyester-Schnittschaum, ausgebildet. Es ist jedoch auch denkbar, dass die Schaumstoffkomponente eine andere, einem Fachmann als sinnvoll erscheinende Ausgestaltung aufweist, insbesondere eine andere, einem Fachmann als sinnvoll erscheinende Ausgestaltung als Schaum mit textilem Charakter, der weichelastisch ist, der rollbar ist und hohe Rücksprungkräfte sowie eine bevorzugt hohe Luftdurchlässigkeit (z.B. retikulierte Schäume) aufweisen kann.

Vorzugsweise weist das Kaschierungstextilverbundmaterial eine Gesamtmaterialstärke auf, die kleiner ist als 7 mm. Insbesondere weist das Kaschierungstextilverbundmaterial eine Gesamtmaterialstärke auf, die größer ist als 0,9 mm. Besonders bevorzugt weist das Kaschierungstextilverbundmaterial eine Gesamtmaterialstärke auf, die einem Wert zwischen 1 mm und 6 mm entspricht. Vorzugsweise setzt sich die Gesamtmaterialstärke des Kaschierungstextilverbundmaterials zumindest aus einer maximalen Vliesstoffstärke der Vliesstoffkomponente und einer maximalen Schaumstoffstärke der Schaumstoffkomponente zusammen.

Vorzugsweise weist die Vliesstoffkomponente zumindest einen Teil an Funktionsfasern auf, die als Hohlfasern ausgebildet sind, und einen Teil an Funktionsfasern, die nicht als Hohlfasern ausgebildet sind. Der Begriff "Hohlfaser" soll hier insbesondere eine Faser definieren, die zumindest einen Hohlraum aufweist, insbesondere eine Faser, die, betrachtet entlang einer Längsachse der Faser, zumindest einen sich zumindest im Wesentlichen entlang einer Gesamtlänge der Faser erstreckenden Hohlraum aufweist, der, betrachtet entlang zumindest einer um die Längsachse der Faser verlaufenden Umfangsrichtung, von zumindest einem Mantel der Faser umschlossen ist. Der Mantel der Faser kann hierbei den Hohlraum insbesondere kreisringförmig, trilobal, polygonal o. dgl. umgeben. Hierbei weist die als Hohlfaser ausgebildete Funktionsfaser vorzugsweise einen Hohlraumanteil von insbesondere zumindest mehr als 1 %, bevorzugt zumindest mehr als 5 % und besonders bevorzugt zumindest mehr als 8 % auf, bezogen auf einen Gesamtvolumenanteil der Hohlfaser. Erfindungsgemâß weist die als Hohlfaser ausgebildete Funktionsfaser einen Hohlraumanteil von weniger als 15 %, insbesondere im Bereich von 10 %, bezogen auf einen Gesamtvolumenanteil der Hohlfaser auf.

Mittels der erfindungsgemäßen Ausgestaltung kann besonders bevorzugt eine Vliesstoffkomponente mit einer spiralgekräuselten Faser realisiert werden. Ferner kann vorteilhaft ein Kaschierungstextilverbundmaterial zur Verfügung gestellt werden, das eine vorteilhafte Verarbeitbarkeit, insbesondere eine zeitsparende Verarbeitbarkeit, ermöglicht. Es kann vorteilhaft eine Verarbeitbarkeit, insbesondere ein Durchheizen zu einem Schmelzen zumindest der Bindefaser, insbesondere während eines Herstellungsprozess des Kaschierungstextilverbundmaterials, ermöglicht werden, die unabhängig von einer Stärke des Kaschierungstextilverbundmaterials - egal ob dick oder dünn - bei einer gleichbleibenden Temperatureinstellung vornehmbar ist. Somit kann vorteilhaft eine kurze Maschinenrüstzeit ermöglicht werden oder eine Maschinenrüstzeit sogar eingespart werden. Zudem kann vorteilhaft eine hohe Verarbeitungsgeschwindigkeit ermöglicht werden, insbesondere bei einem dünnen Kaschierungstextilverbundmaterial, da eine höhere Verarbeitungstemperatur vorteilhaft ein schnelleres Erhitzen des, insbesondere dünnen, Kaschierungstextilverbundmaterials ermöglicht. Hierdurch kann vorteilhaft eine Zeitersparnis bei einer Verarbeitung des Kaschierungstextilverbundmaterials ermöglicht werden.

Besonders bevorzugt weist die Bindefaser eine Schmelztemperatur auf, die einem Wert zwischen 160 °C und 190 °C entspricht. Es ist jedoch auch denkbar, dass die Bindefaser in einer alternativen Ausgestaltung eine Schmelztemperatur aufweist, die größer ist als 220 °C. Mittels der erfindungsgemäßen Ausgestaltung kann vorteilhaft in einem Produktionsprozess eine Temperatureinstellung, die zu einem Erhitzen von Kaschierungstextilverbundmaterial mit einer maximalen Gesamtmaterialstärke von mehr als 7 mm genutzt wird, zu einem Erhitzen von erfindungsgemäßem Kaschierungstextilverbundmaterial genutzt werden.

Ferner wird vorgeschlagen, dass die Schaumstoffkomponente eine maximale Schaumstoffstärke aufweist, die kleiner ist als 5 mm. Insbesondere weist die Schaumstoffkomponente eine maximale Schaumstoffstärke auf, die kleiner ist als 3,5 mm, bevorzugt kleiner ist als 3,1 mm und besonders bevorzugt größer ist als 0,9 mm. Ganz besonders bevorzugt weist die Schaumstoffkomponente eine maximale Schaumstoffstärke auf, die einem Wert aus einem Wertebereich von 1 mm bis 3 mm entspricht. Mittels der erfindungsgemäßen Ausgestaltung kann vorteilhaft erreicht werden, dass die Schaumstoffkomponente ein schnelles Erhitzen eines zusätzlich angebrachten Klebewebs ermöglicht, wobei ein hoher Wärmestrom zwischen der Schaumstoffkomponente und der Vliesstoffkomponente infolge einer dünnen Ausgestaltung der Schaumstoffkomponente realisierbar ist.

Zudem wird vorgeschlagen, dass die Vliesstoffkomponente eine maximale Vliesstoffstärke aufweist, die kleiner ist als 5 mm. Insbesondere weist die Vliesstoffkomponente eine maximale Vliesstoffstärke auf, die kleiner ist als 3,5 mm, bevorzugt kleiner ist als 3,1 mm und besonders bevorzugt größer ist als 0,9 mm. Ganz besonders bevorzugt weist die Vliesstoffkomponente eine maximale Vliesstoffstärke auf, die einem Wert aus einem Wertebereich von 1 mm bis 5 mm entspricht. Vorzugsweise weist das Kaschierungstextilverbundmaterial ein Verhältnis einer maximalen Schaumstoffstärke der Schaumstoffkomponente zu einer maximalen Vliesstoffstärke der Vliesstoffkomponente auf, das zumindest größer als oder gleich 1 ist. Es ist jedoch auch denkbar, dass das Kaschierungstextilverbundmaterial ein Verhältnis einer maximalen Schaumstoffstärke der Schaumstoffkomponente zu einer maximalen Vliesstoffstärke der Vliesstoffkomponente aufweist, das zumindest kleiner als oder gleich 1 ist. Unter einer "maximalen Vliesstoffstärke der Vliesstoffkomponente" soll hier insbesondere eine maximale Erstreckung der Vliesstoffkomponente, betrachtet entlang einer zumindest im Wesentlichen senkrecht zu einer Haupterstreckungsfläche der Vliesstoffkomponente, insbesondere zumindest im Wesentlichen senkrecht zur Verbindungsfläche der Schaumstoffkomponente, verlaufenden Richtung, verstanden werden, die insbesondere von zumindest 70 %, bevorzugt von zumindest 80 % und besonders bevorzugt von zumindest 90 % einer Gesamtanzahl von miteinander verbundenen Fasern der Vliesstoffkomponente gebildet wird, wobei insbesondere eine Gesamtheit der miteinander verbundenen Fasern, betrachtet in einem Querschnitt, eine polygonale Form, wie beispielsweise ein Rechteck, ein Quadrat o. dgl., bilden. Hierbei sollen insbesondere einzelne Fasern, die sich über die polygonale Form hinaus erstrecken, zu einer Bestimmung der maximalen Vliesstoffstärke der Vliesstoffkomponente unberücksichtigt bleiben. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Mittels der erfindungsgemäßen Ausgestaltung kann vorteilhaft eine schnelle Wärmedurchdringung der Vliesstoffkomponente und somit der Bindefasern der Vliesstoffkomponente ermöglicht werden.

Ferner wird vorgeschlagen, dass die Schaumstoffkomponente ein Raumgewicht aufweist, das größer ist als 10 kg/m³. Bevorzugt weist die Schaumstoffkomponente ein Raumgewicht auf, das größer ist als 15 kg/m³ und besonders bevorzugt kleiner ist als 100 kg/m³. Ganz besonders bevorzugt weist die Schaumstoffkomponente ein Raumgewicht auf, das einem Wert aus einem Wertebereich von 20 kg/m³ bis 90 kg/m³ entspricht. Mittels der erfindungsgemäßen Ausgestaltung kann vorteilhaft ein Kaschierungstextilverbundmaterial zur Verfügung gestellt werden, das zusätzlich zu einer vorteilhaften Verarbeitbarkeit vorteilhafte Polsterungseigenschaften aufweist.

Unter "mechanisch miteinander verbunden" soll hier insbesondere eine formschlüssige und/oder kraftschlüssige Verbindung zwischen zumindest zwei Elementen verstanden werden, insbesondere eine formschlüssige und/oder kraftschlüssige Verbindung zwischen der Vliesstoffkomponente und der Schaumstoffkomponente. Vorzugsweise sind die Vliesstoffkomponente und die Schaumstoffkomponente stoffschlussfrei miteinander mechanisch verbunden. Besonders bevorzugt greifen hierbei Fasern der Vliesstoffkomponente in die Schaumstoffkomponente ein. Vorzugsweise ist das Kaschierungstextilverbundmaterial dazu vorgesehen, zumindest teilweise einen Sitzbezug, insbesondere einen Kraftfahrzeugsitzbezug, zu bilden.

Vorteilhafterweise sind die Vliesstoffkomponente und die Schaumstoffkomponente miteinander vernadelt, wobei zumindest mehr als 5 % einer gesamten Verbindungsfläche der Schaumstoffkomponente von Fasern der Vliesstoffkomponente durchstoßen sind. Besonders vorteilhafterweise wird vorgeschlagen, dass die Vliesstoffkomponente und die Schaumstoffkomponente miteinander vernadelt sind, wobei zumindest mehr als 15 % der gesamten Verbindungsfläche der Schaumstoffkomponente von Fasern der Vliesstoffkomponente durchstoßen sind. Bevorzugt erstrecken sich Fasern der Vliesstoffkomponente zumindest auf 15 % der Verbindungsfläche der Schaumstoffkomponente, insbesondere verteilt auf die gesamte Verbindungsfläche, entlang einer zumindest im Wesentlichen quer zur Verbindungsfläche der Schaumstoffkomponente verlaufenden Richtung in die Schaumstoffkomponente hinein. Vorzugsweise sind die Fasern, die die Verbindungsfläche der Schaumstoffkomponente durchstoßen, zumindest im Wesentlichen homogen verteilt an der Verbindungsfläche der Schaumstoffkomponente angeordnet. Unter "im Wesentlichen quer" soll hier insbesondere eine Ausrichtung einer Richtung und/oder einer Achse relativ zu einer Bezugsrichtung und/oder einer Bezugsachse verstanden werden, wobei die Ausrichtung der Richtung und/oder der Achse zumindest verschieden von einer zumindest im Wesentlichen parallelen Ausrichtung zur Bezugsrichtung und/oder zur Bezugsachse ist und insbesondere windschief oder senkrecht zur Bezugsrichtung und/oder zur Bezugsachse ist.

Der Begriff "vernadelt" soll hier insbesondere eine mechanische Verbindung zwischen der Vliesstoffkomponente und der Schaumstoffkomponente definieren, wobei zumindest eine Faser, insbesondere eine Vielzahl an Fasern, der Vliesstoffkomponente sich zumindest teilweise in einem mit der Schaumstoffkomponente verbundenen Zustand der Vliesstoffkomponente in die Schaumstoffkomponente hinein erstreckt/erstrecken. Unter einer "Verbindungsfläche der Schaumstoffkomponente" soll hier insbesondere eine gesamte Fläche der Schaumstoffkomponente verstanden werden, die in einem mit der Vliesstoffkomponente verbundenen Zustand an der Vliesstoffkomponente anliegt, insbesondere eine in eine Projektionsebene projizierte Fläche der Schaumstoffkomponente. Bevorzugt sind die Vliesstoffkomponente und die Schaumstoffkomponente mittels eines Vernadelungsprozesses miteinander verbunden. Somit sind Fasern der Vliesstoffkomponente vorzugsweise in die Schaumstoffkomponente eingenadelt. Es kann vorteilhaft auf einen zusätzlichen Klebstoff verzichtet werden. Es erfolgt vorteilhaft ein mechanischer Halt zwischen der Vliesstoffkomponente und der Schaumstoffkomponente, wobei insbesondere die nach einer Vernadelung aus der Schaumstoffkomponente herausragenden Bindefasern durch ein Aufschmelzen sowie eine Verklebung mit einem auf einer der Vliestoffkomponente abgewandten Seite der Schaumstoffkomponente angeordneten Klebeweb vorgesehen sind, das zu einer Anbindung an beispielsweise ein Leder vorgesehen ist.

Vorzugsweise sind die Vliesstoffkomponente und die Schaumstoffkomponente miteinander vernadelt, wobei pro 1 cm² der Verbindungsfläche der Schaumstoffkomponente zumindest zwei Fasern der Vliesstoffkomponente in die Schaumstoffkomponente eindringen. Insbesondere dringen pro 1 cm² der Verbindungsfläche der Schaumstoffkomponente zumindest drei Fasern der Vliesstoffkomponente, bevorzugt zumindest fünf Fasern der Vliesstoffkomponente und besonders bevorzugt zumindest zehn Fasern der Vliesstoffkomponente in die Schaumstoffkomponente ein. Ganz besonders bevorzugt dringen pro 1 cm² der Verbindungsfläche der Schaumstoffkomponente mehr als zehn Fasern, insbesondere zumindest 20 bis 300 Fasern, der Vliesstoffkomponente in die Schaumstoffkomponente ein. Unter dem Ausdruck "in die Schaumstoffkomponente eindringen" soll hier insbesondere eine Anordnung von Fasern der Vliesstoffkomponente relativ zur Schaumstoffkomponente verstanden werden, wobei sich die Fasern der Vliesstoffkomponente in einem verbundenen Zustand der Vliesstoffkomponente und der Schaumstoffkomponente ausgehend von der Vliesstoffkomponente in die Schaumstoffkomponente hinein erstrecken.

Insbesondere sind die Vliesstoffkomponente und die Schaumstoffkomponente miteinander vernadelt, wobei zumindest ein Großteil von in die Schaumstoffkomponente eindringenden Fasern der Vliesstoffkomponente sich zumindest bis zu 50 % einer maximalen Schaumstoffstärke der Schaumstoffkomponente in die Schaumstoffkomponente hinein erstreckt. Unter einem "Großteil von in die Schaumstoffkomponente eindringenden Fasern" sollen hier insbesondere zumindest mehr als 20 %, bevorzugt mehr als 30 % und besonders bevorzugt mehr als 50 % einer Gesamtanzahl von in die Schaumstoffkomponente eindringenden Fasern der Vliesstoffkomponente verstanden werden. Es ist jedoch auch denkbar, dass einzelne Fasern der Vliesstoffkomponente sich weiter als 50 % der maximalen Schaumstoffstärke der Schaumstoffkomponente in die Schaumstoffkomponente hineinerstrecken oder die Schaumstoffkomponente vollständig durchdringen. Unter dem Ausdruck "sich zumindest bis zu 50 % einer maximalen Schaumstoffstärke der Schaumstoffkomponente in die Schaumstoffkomponente hinein erstrecken" soll hier insbesondere verstanden werden, dass die Fasern der Vliesstoffkomponente ausgehend von einem Randbereich der Vliesstoffkomponente eine Überstandserstreckung, insbesondere in die Schaumstoffkomponente hinein, aufweisen, die zumindest 50 % einer maximalen Schaumstoffstärke der Schaumstoffkomponente entspricht.

Mittels der erfindungsgemäßen Ausgestaltung kann eine besonders vorteilhafte und sichere Verbindung zwischen der Vliesstoffkomponente und der Schaumstoffkomponente ermöglicht werden. Es kann vorteilhaft eine hohe Stabilität der Schaumstoffkomponente erhalten bleiben. Somit können vorteilhaft eine Elastizität und eine Haltbarkeit der Schaumstoffkomponente erhalten bleiben. Zudem kann vorteilhaft eine Oberflächenspannung der Schaumstoffkomponente durch ein Ein- und/oder Durchdringen einer Nadel während des Vernadelungsprozesses gebrochen werden, um eine vorteilhafte Anpassbarkeit des Kaschierungstextilverbundmaterials, insbesondere der Schaumstoffkomponente, an eine Form eines Gegenstands, an dem das Kaschierungstextilverbundmaterial anordenbar ist, zu ermöglichen.

Eine einer Schaumstoff-Vlies-Trennkraft entgegenwirkende Haltekraft zwischen der Vliesstoffkomponente und der Schaumstoffkomponente ist größer als 1 N, insbesondere bedingt durch eine formschlüssige und/oder kraftschlüssige Verbindung zwischen den Fasern der Vliesstoffkomponente und der Schaumstoffkomponente. Unter einer "Schaumstoff-Vlies-Trennkraft" soll hier insbesondere eine in zumindest einem Belastungsfall auf das Kaschierungstextilverbundmaterial einwirkende Kraft verstanden werden, die eine Trennung einer Verbindung zwischen der Vliesstoffkomponente und der Schaumstoffkomponente hervorrufen kann, insbesondere betrachtet entlang einer zumindest im Wesentlichen senkrecht zur Verbindungsfläche der Schaumstoffkomponente verlaufenden Richtung. Insbesondere ist eine einer Schaumstoff-Vlies-Trennkraft entgegenwirkende Haltekraft zwischen der Vliesstoffkomponente und der Schaumstoffkomponente kleiner als 1 kN, bevorzugt kleiner als 0,8 kN und besonders bevorzugt größer als 10 N, insbesondere kleiner als 10 N und größer als 2 N. Eine einer Schaumstoff-Vlies-Trennkraft entgegenwirkende Haltekraft zwischen der Vliesstoffkomponente und der Schaumstoffkomponente ist hierbei vorzugsweise durch ein Eingreifen der Fasern der Vliesstoffkomponente in die Schaumstoffkomponente bedingt, insbesondere bedingt durch eine formschlüssige und/oder kraftschlüssige Verbindung zwischen den Fasern der Vliesstoffkomponente und der Schaumstoffkomponente. Mittels der erfindungsgemäßen Ausgestaltung kann vorteilhaft einer ungewollten Trennung der Vliesstoffkomponente und der Schaumstoffkomponente entgegengewirkt werden oder zumindest im Wesentlichen verhindert werden.

Der erfindungsgemäße Sitzbezug soll hierbei nicht auf die oben beschriebene Anwendung und Ausführungsform beschränkt sein. Insbesondere kann der erfindungsgemäße Sitzbezug zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Schnittansicht eines Kaschierungstextilverbundmaterials in einer schematischen Darstellung,
- Fig. 2: eine Schnittansicht eines Kaschierungstextilverbundmaterials mit einem am Kaschierungstextilverbundmaterial angeordneten Leder eines erfindungsgemäßen Sitzbezugs in einerschematischen Darstellung und
- Fig. 3: eine Schnittansicht eines Kaschierungstextilverbundmaterials mit einem am Kaschierungstextilverbundmaterial angeordneten Leder und einer am Leder angeordneten Lederverstärkung eines erfindungsgemäßen Sitzbezugs in einer schematischen Darstellung.

### Beschreibung des Ausführungsbeispiels

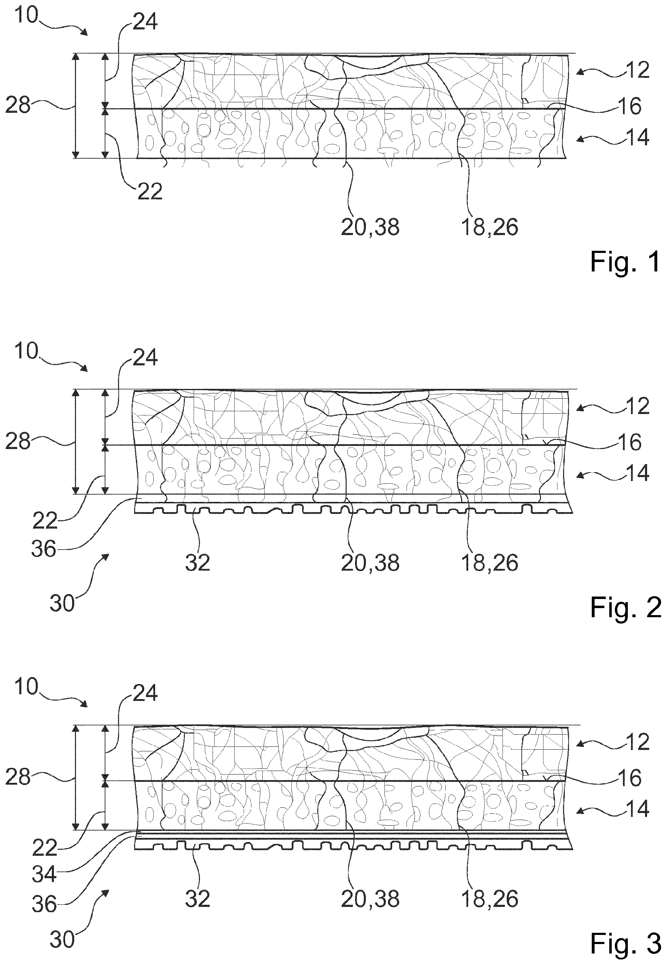

Fig. 1 zeigt ein Kaschierungstextilverbundmaterial 10 mit einer Gesamtmaterialstärke 28, die kleiner ist als 7 mm, und mit zumindest einer Vliesstoffkomponente 12 sowie mit zumindest einer Schaumstoffkomponente 14, die mit der Vliesstoffkomponente 12 verbunden ist. Hierbei sind die Vliesstoffkomponente 12 und die Schaumstoffkomponente 14 mechanisch miteinander verbunden. Die Vliesstoffkomponente 12 und die Schaumstoffkomponente 14 sind miteinander vernadelt, wobei zumindest mehr als 5 % einer gesamten Verbindungsfläche 16 der Schaumstoffkomponente 14 von Fasern 18, 20 der Vliesstoffkomponente 12 durchstoßen sind. Vorzugsweise sind die Vliesstoffkomponente 12 und die Schaumstoffkomponente 14 derart miteinander vernadelt, dass zumindest mehr als 15 % der gesamten Verbindungsfläche 16 der Schaumstoffkomponente 14 von Fasern 18, 20 der Vliesstoffkomponente 12 durchstoßen sind. Somit dringen pro 1 cm² der Verbindungsfläche 16 der Schaumstoffkomponente 14 zumindest zwei Fasern 18, 20 der Vliesstoffkomponente 12 in die Schaumstoffkomponente 14 ein. Vorzugsweise dringen pro 1 cm² der Verbindungsfläche 16 der Schaumstoffkomponente 14 zumindest zehn Fasern 18, 20, insbesondere zwischen 20 und 300 Fasern 18,20, der Vliesstoffkomponente 12 in die Schaumstoffkomponente 14 ein. Es ist jedoch auch denkbar, dass pro 1 cm² der Verbindungsfläche 16 der Schaumstoffkomponente 14 mehr als zehn, insbesondere mehr als 300, Fasern 18, 20 der Vliesstoffkomponente 12 in die Schaumstoffkomponente 14 eindringen.

Ferner erstreckt sich zumindest ein Großteil von den in die Schaumstoffkomponente 14 eindringenden Fasern 18, 20 der Vliesstoffkomponente 12 zumindest bis zu 50 % einer maximalen Schaumstoffstärke 22 der Schaumstoffkomponente 14 in die Schaumstoffkomponente 14 hinein. Es ist jedoch auch denkbar, dass einzelne Fasern 18, 20 oder alternativ der Großteil der Fasern 18, 20 die Schaumstoffkomponente 14 vollständig durchdringen/durchdringt. Zudem ist es denkbar, dass sich einzelne Fasern 18, 20 oder alternativ der Großteil der Fasern 18, 20 weiter als 50 % der maximalen Schaumstoffstärke 22 der Schaumstoffkomponente 14 in die Schaumstoffkomponente 14 hinein erstrecken/erstreckt oder dass sich einzelne Fasern 18, 20 oder alternativ der Großteil der Fasern 18, 20 weniger als 50 % der maximalen Schaumstoffstärke 22 der Schaumstoffkomponente 14 in die Schaumstoffkomponente 14 hinein erstrecken/erstreckt. Ein Verhältnis der maximalen Schaumstoffstärke 22 der Schaumstoffkomponente 14 zu einer maximalen Vliesstoffstärke 24 der Vliesstoffkomponente 12 ist zumindest größer als oder gleich 1. Hierbei weist die Schaumstoffkomponente 14 eine maximale Schaumstoffstärke 22 auf, die kleiner ist als 4 mm. Insbesondere weist die Schaumstoffkomponente 14 eine maximale Schaumstoffstärke 22 auf, die einem Wert aus einem Wertebereich zwischen 1 und 3 mm entspricht. Die Vliesstoffkomponente 12 weist eine maximale Vliesstoffstärke 24 auf, die kleiner ist als 4 mm. Insbesondere weist die Vliesstoffkomponente 12 eine maximale Vliesstoffstärke 24 auf, die einem Wert aus einem Wertebereich zwischen 1 und 3 mm entspricht. Die Gesamtmaterialstärke 28 des Kaschierungstextilverbundmaterials 10 wird hierbei zumindest von der maximalen Schaumstoffstärke 22 der Schaumstoffkomponente 14 und der maximalen Vliesstoffstärke 24 der Vliesstoffkomponente 12 gebildet.

Des Weiteren sind die Vliesstoffkomponente 12 und die Schaumstoffkomponente 14 derart miteinander vernadelt, dass eine einer Schaumstoff-Vlies-Trennkraft entgegenwirkende Haltekraft zwischen der Vliesstoffkomponente 12 und der Schaumstoffkomponente 14 größer ist als 1 N. Dies wird durch einen Vernadelungsprozess der Vliesstoffkomponente 12 und der Schaumstoffkomponente 14 erreicht, bei dem die Fasern 18, 20 der Vliesstoffkomponente 12 mittels einer Nadelmaschine (hier nicht näher dargestellt) in die Schaumstoffkomponente 14 eingenadelt werden, wodurch die Fasern 18, 20 der Vliesstoffkomponente 12 mit der Schaumstoffkomponente 14 einen Form- und/oder Kraftschluss bilden. Die Vliesstoffkomponente 12 ist somit unverlierbar, also dauerhaft, mit der Schaumstoffkomponente 14 verbunden. Die Schaumstoffkomponente 14 weist hierbei ein Raumgewicht auf, das größer ist als 10 kg/m³. Die Vliesstoffkomponente 12 weist ein Flächengewicht auf, das größer ist als 45 g/m².

Ferner umfasst die Vliesstoffkomponente 12 zumindest eine Funktionsfaser 26, die einen Feinheitswert kleiner als oder gleich 50 dtex aufweist. Die Funktionsfaser 26 wird hierbei von einer der Fasern 18, 20 der Vliesstoffkomponente 12 gebildet. Die Funktionsfaser 26 ist als Hohlfaser ausgebildet. Hierbei kann die Funktionsfaser 26 jeden einem Fachmann als sinnvoll erscheinenden Querschnitt aufweisen, wie beispielsweise einen sternförmigen Querschnitt, einen viereckigen Querschnitt, einen trilobalen Querschnitt, einen hufeisenförmigen Querschnitt, einen kreisringförmigen Querschnitt o. dgl. Insgesamt weist die Vliesstoffkomponente 12 eine Vielzahl an Funktionsfasern 26 auf, die einen Feinheitswert kleiner als oder gleich 50 dtex aufweisen und insbesondere als Hohlfasern ausgebildet sind.

Zudem weist die Vliesstoffkomponente 12 zumindest eine Bindefaser 38 (Schmelzfaser) auf, die eine Schmelztemperatur aufweist, die größer ist als 150 °C. Hierbei ist die Schmelztemperatur der zumindest einen Bindefaser 38 kleiner als 220 °C. Die Schmelztemperatur der Bindefaser 38 entspricht einem Wert aus einem Wertebereich von 160 °C bis 180 °C. Insbesondere entspricht die Schmelztemperatur der Bindefaser 38 einem Wert aus einem Wertebereich zwischen 160 °C und 180 °C. Die Bindefaser 38 wird von einer der Fasern 18, 20 der Vliesstoffkomponente 12 gebildet. Insgesamt weist die Vliesstoffkomponente 12 eine Vielzahl an Bindefasern 38 auf. Die Bindefasern 38 und/oder die Funktionsfasern 26 der Vliesstoffkomponente 12 sind infolge eines Vermischens untereinander mittels einer formschlüssigen Verbindung (durch Verschlingung), mittels Kohäsion und/oder mittels Adhäsion verbunden. Hierbei können die Bindefasern 38 und/oder die Funktionsfasern 26 zu einer Bildung der Vliesstoffkomponente 12 orientiert oder wirr angeordnet sein.

Das Kaschierungstextilverbundmaterial 10 ist als Sitzbezugskaschierungstextilverbundmaterial ausgebildet. Somit ist das Kaschierungstextilverbundmaterial 10 zu einer zumindest teilweisen Bildung eines Sitzbezugs 30, insbesondere eines Kraftfahrzeugsitzbezugs vorgesehen. Hierzu ist das Kaschierungstextilverbundmaterial 10 mit zumindest einem weiteren Material 32, wie beispielsweise einem Stoff, einem Leder, einem Kunstleder o. dgl., verbindbar (Figuren 2 und 3). Der Sitzbezug 30 ist somit zumindest mittels einer Verbindung des Kaschierungstextilverbundmaterials 10 und des weiteren Materials 32 bildbar. In dem in Figur 2 dargestellten Ausführungsbeispiel ist das weitere Material 32 als Leder ausgebildet, das zur Bildung des Sitzbezugs 30 mit dem Kaschierungstextilverbundmaterial 10 verbindbar ist. Hierzu ist das weitere Material 32 auf einer der Vliesstoffkomponente 12 abgewandten Seite der Schaumstoffkomponente 14 anordenbar. Zu einer Verbindung des Kaschierungstextilverbundmaterials 10 und des weiteren Materials 32 weist das Kaschierungstextilverbundmaterial 10 oder der Sitzbezug 30 zumindest eine Verbindungskomponente 36 auf. Die Verbindungskomponente 36 ist als Klebekomponente ausgebildet. Hierbei ist es denkbar, dass die Verbindungskomponente 36 als Klebevlies/Klebeweb, als selbsthaftender Klebstoff, insbesondere als selbsthaftender, druckempfindlicher Klebstoff, o. dgl. ausgebildet ist. Bei einer Ausgestaltung der Verbindungskomponente 36 als Klebevlies/Klebeweb weist die Verbindungskomponente 36 eine netzartige Struktur auf und ist insbesondere aus einem ähnlichen oder gleichen Material wie die Bindefaser 38 ausgebildet, wobei die Verbindungskomponente 36 einen Schmelzpunkt aufweist, der einem Wert aus einem Wertebereich von 50 °C bis 140 °C, bevorzugt aus einem Wertebereich von 90 °C bis 100 °C entspricht. Hierbei ist es auch denkbar, dass die Verbindungskomponente 36 beispielsweise als Co-Polyamid gebildet.

Bei einer alternativen Ausgestaltung des weiteren Materials 32 als Stoff oder als Kunstleder ist die Verbindungskomponente 36 zumindest teilweise einteilig mit der Schaumstoffkomponente 14 ausgebildet oder die Verbindungskomponente 36 ist als zusätzliche Schaumstoffkomponente ausgebildet, wobei die Verbindungskomponente 36 in beiden Ausführungen flammkaschierbar ist. Bei einer Ausgestaltung der Verbindungskomponente 36 als zusätzliche Schaumstoffkomponente ist vorteilhafterweise ein, einem Fachmann bereits bekanntes Lost-Foam-Verfahren anwendbar. Hierbei ist die Verbindungskomponente 36 mittels Flammkaschierens an der Schaumstoffkomponente 14 anordenbar ist und das weitere Material 32 ist mittels eines Flammkaschierens an der bereits an der Schaumstoffkomponente 14 angeordneten Verbindungskomponente 36 anordenbar. Somit ist die als zusätzliche Schaumstoffkomponente ausgebildete Verbindungskomponente 36 nach dem Flammkaschieren lediglich als dünne Klebeschicht vorhanden. Es kann vorteilhaft eine ursprüngliche Stärke des Kaschierungstextilverbundmaterials 10 zumindest im Wesentlichen beibehalten werden. Ferner ist es ebenfalls denkbar, dass alternativ oder zusätzlich Klebepunkte und/oder Klebepulver, Meltprint-Verfahren, Hotmelt-Kleber, Klebefolien oder andere, einem Fachmann als sinnvoll erscheinende Klebemaßnahmen oder Klebeverfahren, insbesondere Heiß- oder Kaltklebeverfahren, zu einer Verbindung des weiteren Materials 32 mit der Schaumstoffkomponente 14 Anwendung finden, die vorteilhaft einen textilen Charakter des Kaschierungstextilverbundmaterials 10 erhalten.

Das Kaschierungstextilverbundmaterial 10 ist beispielsweise mittels einer Flachbettkaschieranlage oder mittels einer Lederfixieranlage mit dem weiteren Material 32 verbindbar. Hierbei kann eine Verarbeitungstemperatur zur Verbindung des Kaschierungstextilverbundmaterials 10 und des weiteren Materials 32 vorteilhaft gering gehalten werden, insbesondere bei einer Ausgestaltung der Verbindungskomponente 36 als Klebevlies/Klebeweb.

In Figur 3 weist der Sitzbezug 30 zusätzlich zum Kaschierungstextilverbundmaterial 10 und dem weiteren Material 32 zumindest ein Verstärkungsmaterial 34 auf. Das Verstärkungsmaterial 34 ist hierbei dazu vorgesehen, das weitere Material 32 zu verstärken. Somit ist das Verstärkungsmaterial 34 in dem in der Figur 3 dargestellten Ausführungsbeispiel des Kaschierungstextilverbundmaterials 10 als Lederverstärkungsmaterial ausgebildet. Es ist jedoch auch denkbar, dass das Verstärkungsmaterial 34 eine andere, einem Fachmann als sinnvoll erscheinende Ausgestaltung aufweist, insbesondere eine Ausgestaltung, die abhängig ist von einer Ausgestaltung des weiteren Materials 32. Das Verstärkungsmaterial 34 ist zwischen dem Kaschierungstextilverbundmaterial 10 und dem weiteren Material 32 angeordnet. Hierbei ist das Verstärkungsmaterial 34 auf einer der Vliesstoffkomponente 12 abgewandten Seite der Schaumstoffkomponente 14 angeordnet, insbesondere zwischen der Schaumstoffkomponente 14 und der Verbindungskomponente 36. Es ist jedoch auch denkbar, dass das Verstärkungsmaterial 34 eine andere, einem Fachmann als sinnvoll erscheinende Anordnung aufweist. Das Verstärkungsmaterial 34 kann als Gewebe, Gewirke, Gestrick, Gitter o. dgl. zu einer Lederunterstützung ausgebildet sein. Vorzugsweise ist das Verstärkungsmaterial 34 mittels eines Klebewebs (hier nicht näher dargestellt) mit der Schaumstoffkomponente 14 fixierbar. Somit kann eine Lederdehnung bei einer Belastung vorteilhaft zumindest im Wesentlichen verhindert bzw. zumindest vermindert werden. Zudem können vorteilhaft speziell belastete Bereiche des Sitzbezugs 30, wie beispielsweise eine Austrittsstelle eines Seitenairbags, mit entsprechenden Verstärkungen versehen werden. Ferner ist mittels einer geeigneten Wahl des Verstärkungsmaterials 34 gezielt zumindest eine Dehnungseigenschaft, eine Materialeigenschaft, insbesondere eine maximal auszuhaltende Zugkraft usw., des Kaschierungstextilverbundmaterials 10 veränderbar. Bei einer alternativen, hier nicht näher dargestellten Ausgestaltung des weiteren Materials 32 als Stoff oder als Kunstleder ist zudem denkbar, dass zusätzlich zur Verbindungskomponente 36 ein chemisches Bindemittel (hier nicht näher dargestellt), wie beispielsweise ein Klebstoff, vorgesehen ist, das am weiteren Material 32 und oder am Kaschierungstextilverbundmaterial 10 anordenbar ist. Dieses Bindemittel kann vorteilhaft einen Faserflug von Fasern des weiteren Materials 32 und/oder eine Anhaftung von Fasermaterial der Vliesstoffkomponente 12 an dem weiteren Material 32 zumindest im Wesentlichen vermeiden bzw. zumindest verringern, insbesondere nach einem Aushärteprozess des Bindemittels. Es kann vorteilhaft ein Fusselschutz ermöglicht werden.

Das Kaschierungstextilverbundmaterial 10 ermöglicht vorteilhaft auch an schwierigen Sitzkonturen eines Sitzes, insbesondere eines Kraftfahrzeugsitzes, wie beispielsweise an einer konvex-konkav ausgestalteten Polsterung eines Sitzes, an einem stark belasteten Bereich eines Sitzes, wie eine Seitenwange einer Einstiegsseite eines Sitzes usw., eine glatte und faltenfreie Anordnung des Kaschierungstextilverbundmaterials 10. Zudem ist das Kaschierungstextilverbundmaterial 10 vorteilhaft in kleinsten Radien hoch drapierfähig, wie beispielsweise bei einer Anordnung des Kaschierungstextilverbundmaterials 10 an einem Sitz, bei dem das Kaschierungstextilverbundmaterial 10 in einem Teilbereich des Kaschierungstextilverbundmaterials 10 konvex geformt ist und in einem direkt an den Teilbereich angrenzenden weiteren Teilbereich des Kaschierungstextilverbundmaterials 10 konkav geformt ist. Ferner ist das Kaschierungstextilverbundmaterial 10 schwer entflammbar nach FMVSS 302 bzw. ISO 3795 ausgebildet. Des Weiteren werden sämtliche mitgeltende Unterlagen der Automobilindustrie beachtet, beispielsweise Forderungen nach Emission/Fogging/Geruch, die Altautoverordnung, etc. pp.

### Bezugszeichen

- 10: Kaschierungstextilverbundmaterial
- 12: Vliesstoffkomponente
- 14: Schaumstoffkomponente
- 16: Verbindungsfläche
- 18: Faser
- 20: Faser
- 22: Schaumstoffstärke
- 24: Vliesstoffstärke
- 26: Funktionsfaser
- 28: Gesamtmaterialstärke
- 30: Sitzbezug
- 32: weiteres Material
- 34: Verstärkungsmaterial
- 36: Verbindungskomponente
- 38: Bindefaser

## Patentansprüche

1. Sitzbezug, der zumindest teilweise aus einem Kaschierungstextilverbundmaterial gebildet ist, wobei das Kaschierungstextilverbundmaterial eine Gesamtmaterialstärke (28) aufweist, die kleiner ist als 7 mm, und wobei das Kaschierunqstextilverbundmaterial zumindest einef Vliesstoffkomponente (12) sowie mit-zumindest einef Schaumstoffkomponente (14), die mit der Vliesstoffkomponente (12) verbunden ist, aufweist, wobei die Vliesstoffkomponente (12) zumindest eine Bindefaser (38) aufweist, die eine Schmelztemperatur aufweist, die größer ist als 150 °C, wobei die Vliesstoffkomponente (12) zumindest eine Funktionsfaser (26) umfasst, die einen Feinheitswert kleiner als oder gleich 50 dtex aufweist, wobei die Funktionsfaser (26) als Hohlfaser ausgebildet ist, **dadurch gekennzeichnet, dass** die Vliesstoffkomponente (12) eine Vielzahl an Bindefasern (38) und eine Vielzahl an Funktionsfasern (26) aufweist, die miteinander vermischt sind, wobei die Bindefasern (38) und/oder die Funktionsfasern (26) als Spinnfasern oder als Filamente vorliegen, wobei die Bindefasern (38) und/oder die Funktionsfasern (26) der Vliesstoffkomponente (12) infolge eines Vermischens untereinander mittels einer formschlüssigen Verbindung, mittels Kohäsion und/oder mittels Adhäsion verbunden sind, wobei die Bindefasern (38) und/oder die Funktionsfasern (26) zu einer Bildung der Vliesstoffkomponente (12) orientiert oder wirr angeordnet sind, wobei die Vliesstoffkomponente (12) und die Schaumstoffkomponente (14) mechanisch miteinander verbunden sind, wobei die Vliesstoffkomponente (12) und die Schaumstoffkomponente (14) miteinander vernadelt sind, eine einer Schaumstoff-Vlies-Trennkraft entgegenwirkende Haltekraft zwischen der Vliesstoffkomponente (12) und der Schaumstoffkomponente (14) größer ist als 1 N, wobei die als Hohlfaser ausgebildete Funktionsfaser (26) einen Hohlraumanteil von weniger als 15 % bezogen auf einen Gesamtvolumenanteil der Hohlfaser aufweist, und wobei die Bindefaser (38) eine Schmelztemperatur aufweist, die einem Wert zwischen 160 °C und 190 °C entspricht.

2. Sitzbezug nach Anspruch 1, **dadurch gekennzeichnet, dass** die Schaumstoffkomponente (14) eine maximale Schaumstoffstärke (22) aufweist, die kleiner ist als 5 mm.

3. Sitzbezug nach einem der vorhergehenden Ansprüche, **dadurch gekennzeichnet, dass** die Vliesstoffkomponente (12) eine maximale Vliesstoffstärke (24) aufweist, die kleiner ist als 5 mm.

4. Sitzbezug nach einem der vorhergehenden Ansprüche, **dadurch gekennzeichnet, dass** die Schaumstoffkomponente (14) ein Raumgewicht aufweist, das größer ist als 10 kg/m³.

## Claims

1. Seat cover made at least partially of a textile composite material for lamination, the textile composite material for lamination having a total material thickness (28) which is smaller than 7 mm and the textile composite material for lamination having at least one nonwoven fabric component (12) and at least one foam material component (14) which is connected to the nonwoven fabric component (12), wherein the nonwoven fabric component (12) comprises at least one binder fibre (38) having a melting temperature that is greater than 150°C, wherein the nonwoven fabric component (12) comprises at least one functional fibre (26) having a linear mass density value smaller than or equal to 50 dtex, wherein the functional fibre (26) is embodied as a hollow fibre, **characterised in that** the nonwoven fabric component (12) comprises a plurality of binder fibres (38) and a plurality of functional fibres (26), which are mixed up with one another, wherein the binder fibres (38) and/or the functional fibres (26) are present as spinning fibres or as filaments, wherein due to being mixed up with one another the binder fibres (38) and/or the functional fibres (26) of the nonwoven fabric component (12) are interconnected via a form-fit connection, via cohesion and/or via adhesion, wherein for implementing the nonwoven fabric component (12) the binder fibres (38) and/or the functional fibres (26) are arranged in an oriented fashion or in a tangled fashion, wherein the nonwoven fabric component (12) and the foam material component (14) are connected to each other mechanically, wherein the nonwoven fabric component (12) and the foam material component (14) are needled with each other, wherein a holding force between the nonwoven fabric component (12) and the foam material component (14), which acts counter to a foam-nonwoven separating force, is greater than 1 N, wherein the functional fibre (26) that is embodied as a hollow fibre comprises a hollow-space portion of less than 15 % with respect to a total volume portion of the hollow fibre, and wherein the binder fibre (38) has a melting temperature equivalent to a value between 160°C and 190°C.

2. Seat cover according to claim 1, **characterised in that** the foam material component (14) has a maximum foam material thickness (22) which is smaller than 5 mm.

3. Seat cover according to one of the preceding claims, **characterised in that** the nonwoven fabric component (12) has a maximum nonwoven fabric thickness (24) which is smaller than 5 mm.

4. Seat cover according to one of the preceding claims, **characterised in that** the foam material component (14) has a volumetric weight which is greater than 10 kg per m³.

## Revendications

1. Housse de siège, implémentée au moins partiellement du matériau composite textile de contre-collage, le matériau composite textile de contre-collage ayant une épaisseur de matériau entière (28) inférieure à 7 mm et le matériau composite textile de contre-collage comprenant au moins un composant non-tissé (12) et au moins un composant mousse (14) raccordé au composant non-tissé (12),
le composant non-tissé (12) comportant au moins une fibre liante (38) ayant une température de fusion supérieure à 150°C,
le composant non-tissé (12) comportant au moins une fibre fonctionnelle (26) ayant une masse linéique inférieure ou égale à 50 dtex,
la fibre fonctionnelle (26) étant réalisée comme fibre creuse,
**caractérisé en ce que** le composant non-tissé (12) comporte une pluralité de fibres liantes (38) et une pluralité de fibres fonctionnelles (26) mêlées entre elles,
les fibres liantes (38) et/ou les fibres fonctionnelles (26) étant implémentées comme des fibres discontinues ou filaments,
les fibres liantes (38) et/ou les fibres fonctionnelles (26) du composant non-tissé (12) étant, en raison d'être mêlées entre elles, raccordées par le biais d'une liaison par forme, par cohésion et/ou par adhésion,
les fibres liantes (38) et/ou les fibres fonctionnelles (26) étant, pour une implémentation du composant non-tissé (12), disposées orientées ou confuses,
le composant non-tissé (12) et le composant mousse (14) étant raccordés l'un à l'autre mécaniquement,
le composant non-tissé (12) et le composant mousse (14) étant aiguillés l'un avec l'autre,
une force de rétention entre le composant non-tissé et le composant mousse (14), agissant contre une force séparatif mousse-non-tissé, étant supérieure à 1 N,
la fibre fonctionnelle (26) ayant une fraction en espace creux inférieur à 15 % par rapport à une fraction de volume total de la fibre creuse, et la fibre liante (38) ayant une température de fusion équivalent à une valeur entre 160°C et 190°C .

2. Housse de siège selon la revendication 1, **caractérisé en ce que** le composant mousse (14) comporte une épaisseur de mousse maximale (22) inférieure à 5 mm.

3. Housse de siège selon l'une quelconque des revendications précédentes, **caractérisé en ce que** le composant non-tissé (12) comporte une épaisseur de matériau non-tissé maximale (24) inférieure à 5 mm.

4. Housse de siège selon l'une quelconque des revendications précédentes, **caractérisé en ce que** le composant mousse (14) comporte une masse volumique supérieure à 10 kg/m³.
